# EUROPÄISCHE PATENTANMELDUNG

(11) **EP 1 459 622 A1**
(43) Veröffentlichungstag der Anmeldung: **22.09.2004**
(21) Anmeldenummer: 04100343.5
(22) Anmeldetag: 30.01.2004
(51) Int. Cl.: A01G 13/10, A01G 9/20

(54) **Gartenbeetzaun**

(30) Priorität: 21.03.2003 CH 476032003
(71) Anmelder: Egger, Ueli, 6612 Ascona (CH)
(72) Erfinder: Egger, Ueli, 6612 Ascona (CH)
(74) Vertreter: Scheuzger, Beat Otto

(57) **Zusammenfassung**

Ein Gartenbeetzaun besteht aus Seitenwandelementen (1), die durch Steckelemente (2) miteinander verbindbar sind und wodurch eine geschlossenen Umzäunung des Gartenbeets gebildet werden kann. Die Seitenwandelemente (1) bestehen aus Platten (9), deren nach oben gerichteter Wandbereich (10) umgebogen ist, so dass ein längsstreifenförmiger Kragen (11) entsteht. Dieser ist im wesentlichen parallel zur Platte (9) ausgerichtet und von dieser beabstandet. Im längsstreifenförmigen Kragen (11) sind Durchbrüche (12) angebracht, wodurch eine Sperre gegen das Eindringen von Schnecken erhalten wird. Dieser Gartenbeetzaun kann zusätzlich mit Abdeckelementen zum Schutz der Pflanzen vor Witterungseinflüssen versehen werden.

## Beschreibung

Die vorliegende Erfindung bezieht sich auf einen Gartenbeetzaun, umfassend Seitenwandelemente, welche miteinander verbindbar sind und eine geschlossene Umzäunung des Gartenbeets bilden.

Mit derartigen Gartenbeetzäunen soll insbesondere erreicht werden, dass Schnecken vom Gartenbeet ferngehalten werden können.

Derartige Gartenbeetzäune sind bekannt. So zeigt beispielsweise die Veröffentlichung DE-U-84 0 7128 eine derartige Gartenbeetumrandung mit einer Schneckenschutzvorrichtung, die durch eine Rinne gebildet wird, die am oberen Rand des Umrandungsstreifens angebracht ist. In diese Rinne können Schneckenkörner eingestreut werden. Zusätzlich ist für diese Rinne eine Überdachung vorgesehen.

Diese Gartenbeetumrandung ist relativ kompliziert in der Herstellung, zusätzlich muss diese Gartenbeetumrandung gewartet werden. Diese Wartung besteht darin, dass die Schneckenkörner erneuert werden müssen, und dass andererseits diese Gartenbeetumrandung und insbesondere die Rinne von toten Schnecken gesäubert werden muss, die die Schneckenkörner gefressen haben.

Die Aufgabe der vorliegenden Erfindung besteht nun darin, einen Gartenbeetzaun zu schaffen, der einfach in der Herstellung ist, der einfach aufgestellt werden kann und der einen wirksamen Schutz bildet gegen das Eindringen von Schnecken, ohne dass zusätzliche Mittel erforderlich sind.

Erfindungsgemäss erfolgt die Lösung dieser Aufgabe dadurch, dass die Seitenwandelemente aus Platten bestehen, deren nach oben gerichteter Randbereich umgebogen ist, so dass ein längsstreifenförmiger Kragen entsteht, der im wesentlichen parallel zur Latte ausgerichtet ist und von dieser beabstandet ist, in welchem längsstreifenförmigen Kragen Durchbrüche angebracht sind, und dass die Seitenwandelemente durch Steckelemente miteinander verbindbar sind.

Dieser längsstreifenförmige Kragen, in welchem die Durchbrüche angebracht sind, und der hinsichtlich der Umzäunung aussenseitig am entsprechenden Seitenwandelement vorstehend ist, bildet für die Schnecken ein zumindest schwer überwindbares Hindernis.

Insbesondere wenn die Durchbrüche durch eine Reihe von im wesentlichen rechteckförmigen Öffnungen gebildet ist, und der zwischen den einzelnen Öffnungen bestehende jeweilige Steg eine Breite aufweist, die wesentlich kleiner ist als die Breite der Öffnungen und die Öffnungen eine Höhe aufweisen, die mindestens der halben Höhe des Kragens entspricht, ergibt für die Schnecken ein praktisch nicht überwindbares Hindernis.

In vorteilhafter Weise ist jedes Steckelement, mit welchem die Seitenwandelemente verbunden werden, pro Seite mit zwei Zungen ausgestattet, welche in zwei an den Endbereichen der Seitenwandelemente angebrachte Laschen einsteckbar sind. Einerseits wird dadurch ein sehr einfaches Aufstellen eines entsprechenden Gartenbeetzauns ermöglicht, andererseits sind sowohl die Steckelemente als auch die Seitenwandelemente in einfacher Weise und somit günstig herstellbar.

Zur geraden Verbindung zweier Seitenwandelemente ist das Steckelement eben ausgebildet, während zur winkligen Verbindung zweier Seitenwandelemente das Steckelement winklig ausgebildet ist. Vorzugsweise sind die winkligen Steckelemente rechtwinklig ausgebildet, dadurch können quadratische und rechteckförmige Gartenbeetzäune erstellt werden, deren Grösse beliebig ist. Die Steckelemente können aber auch andere Winkel aufweisen, so dass mehreckige Gartenbeetzäune, praktisch in beliebiger Form, gebildet werden können.

Eine weitere vorteilhafte Ausgestaltung der Erfindung besteht darin, dass der im eingesteckten Zustand der Steckelemente obere Seitenrand um einen im wesentlichen rechten Winkel umgebogen ist, und dass in diesem umgebogenen Bereich schlitzförmige Ausnehmungen angebracht sind. Insbesondere wenn die Umzäunung in Form eines Rechtecks aufgebaut ist, in welchem die beiden Stirnseiten jeweils durch ein Seitenwandelement gebildet sind, während die beiden Längsseiten jeweils aus einem Seitenwandelement oder mehreren aneinander gereihten und miteinander verbundenen Seitenwandelementen gebildet sind, können in die die Seitenwandelemente verbindenden, einander gegenüberliegenden Steckelemente Querstreben eingesteckt werden, wobei die beiden jeweils endseitig an zwei aneinander gegenüberliegenden Seitenwandelementen angebrachten Querstreben ein Paar bilden. Durch diese Querstreben wird eine Verstärkung des Gartenbeetzaunes erreicht. Diese Querstreben sind mit Elementen ausgestattet, die in die schlitzförmigen Ausnehmungen der Steckelemente einsteckbar sind.

Einen besonders einfachen Aufbau der Querstreben wird dadurch erreicht, dass diese jeweils im wesentlichen aus einem U-Profil gebildet sind, welches aus zwei Schenkeln und einem diese beiden Schenkel verbindenden Steg besteht, wobei die Querstreben so auf die die Seitenwandelemente verbindenden Steckelemente aufsteckbar sind, dass die offenen Seiten der U-Profile zweier ein Paar bildender Querstreben gegeneinander gerichtet sind.

Eine weitere Aufgabe der vorliegenden Erfindung besteht darin, dass der Gartenbeetzaun in einfacher Weise mit einer Abdeckung versehen werden kann, was dadurch gelöst wird, dass die Abdeckung an den jeweils ein Paar bildenden Querstreben anbringbar ist.

In vorteilhafter Weise ist hierbei die Abdeckung durch zwei im wesentlichen lichtdurchlässige Platten gebildet, die längsseitig um eine Schwenkachse schwenkbar miteinander verbunden sind, und dass an den der Schwenkachse abgewandten Endbereichen der beiden Platten jeweils ein Zapfen angebracht ist, dessen Achse parallel zur Schwenkachse ausgerichtet und über die Platte vorstehend ist, welche Zapfen in die U-Profile der Querstreben hineinragen.

Dadurch wird in einfacher Weise ein abgedecktes Gartenbeet erhalten.

In vorteilhafter Weise sind mindestens die beiden Zapfen der einen Platte im U-Profil der jeweiligen Querstrebe längsverschiebbar. Durch dieses Längsverschieben der beiden Zapfen der einen Platte in den U-Profilen der Querstreben kann die Abdeckung von einer das Gartenbeet abdeckenden Position in eine hochgeschwenkte Position gebracht werden, das Gartenbeet wird zugänglich.

Indem die schwenkbare Verbindung der beiden Platten durch ein flexibles Band gebildet ist, das mit den beiden Platten verbunden ist, beispielsweise verklebt, wird in einfachster Weise die gelenkige Verbindung erhalten.

Eine Ausführungsform der vorliegenden Erfindung wird nachfolgend anhand der beiliegenden Zeichnung beispielhaft näher erläutert.

Es zeigt
Fig. 1 in räumlicher Darstellung ein aus Seitenwandelementen gebildeter Gartenbeetzaun, mit eingesetzten Querstreben;
Fig. 2 eine Draufsicht auf ein Seitenwandelement;
Fig. 3 in räumlicher Darstellung einen Eckbereich des Seitenwandelementes gemäss Fig. 2;
Fig. 4 in räumlicher Darstellung ein Steckelement für eine gerade Verbindung von zwei Seitenwandelementen;
Fig. 5 in räumlicher Darstellung ein Steckelement zur winkligen Verbindung zweier Seitenwandelemente;
Fig. 6 in räumlicher Darstellung ein Eckstück zum Aufsetzen auf zwei rechtwinklig miteinander verbundenen Seitenwandelementen;
Fig. 7 in räumlicher Darstellung eine Querstrebe;
Fig. 8 in vergrösserter räumlicher Darstellung der Endbereich der Querstrebe gemäss Fig. 7;
Fig. 9 in räumlicher Darstellung der Gartenbeetzaun gemäss Fig. 1 mit aufgesetzten Abdeckungen;
Fig. 10 in räumlicher Darstellung ein Abdeckelement; und
Fig. 11 in vergrösserter räumlicher Darstellung die schwenkbare Verbindung der eine Abdeckung bildenden beiden Platten.

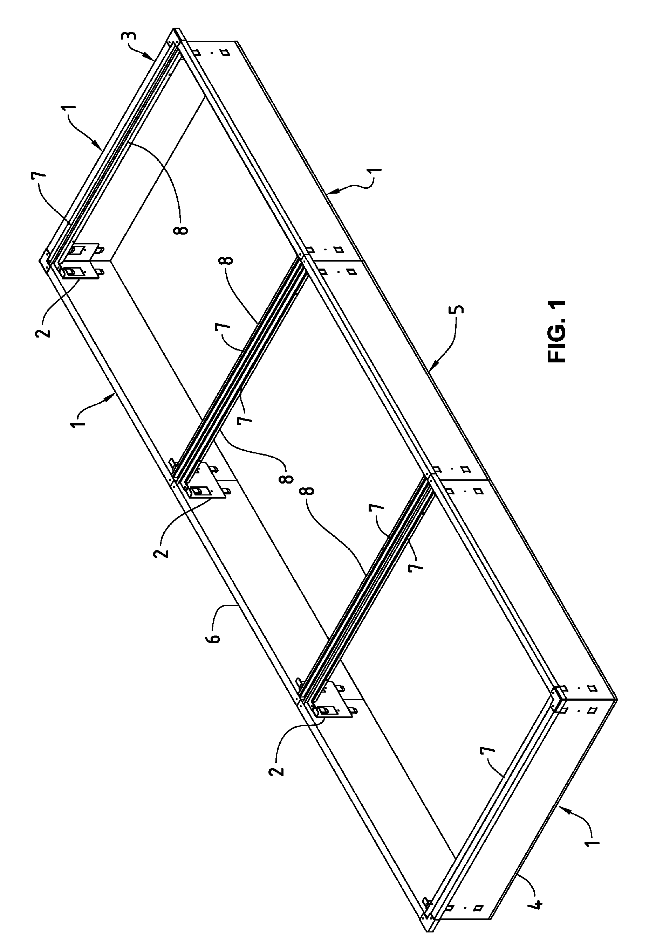

In Fig. 1 ist ein Gartenbeetzaun dargestellt, der aus Seitenwandelementen 1 zusammengesetzt ist. Diese Seitenwandelemente 1 sind über Steckelemente 2 miteinander verbindbar und bilden eine geschlossene Umzäunung. Im hier dargestellten Beispiel bildet jeweils ein Seitenwandelement 1 die Stirnseite 3 und 4, während die Längsseiten 5 und 6 durch jeweils drei Seitenwandelemente 1 gebildet sind. Die die Längsseiten 5 und 6 bildenden Seitenwandelemente 1 sind durch ebene Steckelemente 2 miteinander verbunden, während die Steckelemente 2, die jeweils die Stirnseiten 3 und 4 mit den jeweiligen Längsseiten 5 und 6 verbinden, winklige Steckelemente sind, wie später noch beschrieben wird.

Auf die winkligen Steckelemente 2 von jeder Stirnseite 3 bzw. 4 ist jeweils eine Querstrebe 7 aufgesteckt, die parallel zur jeweiligen Stirnseite 3 bzw. 4 verläuft. Auf die ebenen Steckelemente 2 sind jeweils zwei Querstreben 7 aufgesteckt, die parallel zu den Stirnseiten 3 bzw. 4 ausgerichtet sind. Die beiden jeweils endseitig an zwei aneinander gegenüberliegenden Seitenwandelementen 1 angebrachten Querstreben 7 bilden jeweils ein Paar 8.

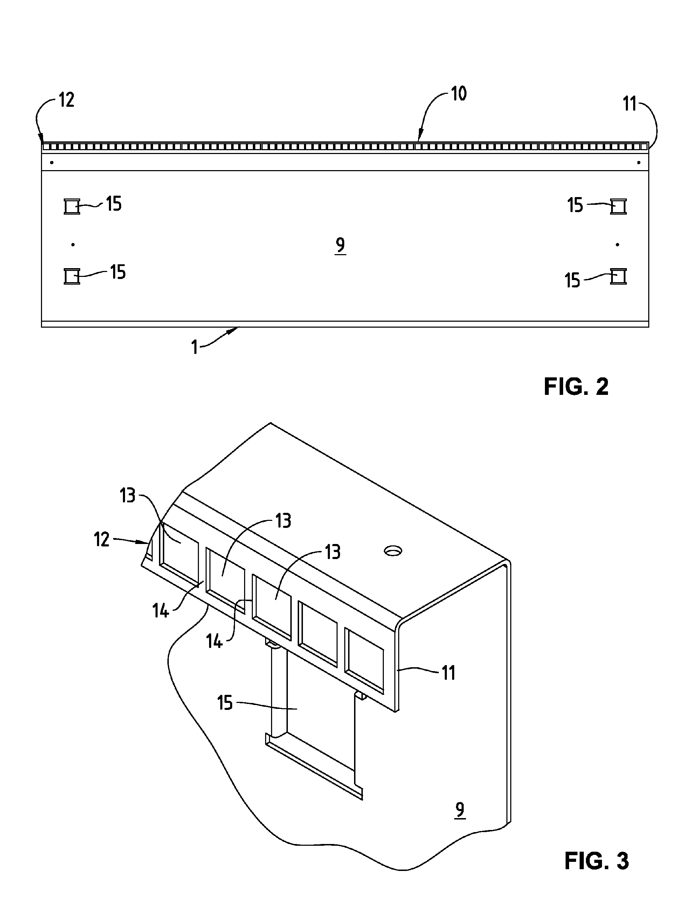

Der Aufbau eines Seitenwandelementes 1 ist aus den Fig. 2 und 3 ersichtlich. Jedes Seitenwandelement 1 ist aus einer Platte 9 gebildet, die beispielsweise aus einer Blechtafel aus nicht rostendem Material erhalten wird. Selbstverständlich sind auch andere Materialien, beispielsweise aus Kunststoff, denkbar. Der nach oben gerichtete Randbereich 10 der Platte 9 ist zweimal abgewinkelt, so dass ein längsstreifenförmiger Kragen 11 gebildet wird, der im wesentlichen parallel zur Platte 9 ausgerichtet und von dieser beabstandet ist. In diesem längsstreifenförmigen Kragen 11 sind Durchbrüche 12 angebracht, die aus einer Reihe von rechteckförmigen Öffnungen 13 bestehen. Der zwischen den einzelnen Öffnungen 13 bestehende Steg 14 weist eine Breite auf, die wesentlich kleiner ist als die Breite der Öffnungen 13. Zudem weisen die Öffnungen 13 eine Höhe auf, die grösser ist, als die halbe Höhe des streifenförmigen Kragens 11. Diese Abwinkelung mit dem längsstreifenförmigen Kragen 11, die bei der Umzäunung eines Gartenbeetes, wie sie in Fig. 1 dargestellt ist, vom umzäunten Gartenbeet her gesehen gegen aussen gerichtet ist, bildet für Schnecken ein praktisch unüberwindbares Hindernis.

An den beiden Endbereichen des Seitenwandelementes 1 sind jeweils zwei Laschen 15 angebracht, die übereinander angeordnet sind. In diese Laschen 15 sind die Steckelemente 2 (Fig. 1) einsteckbar, wie später noch beschrieben wird.

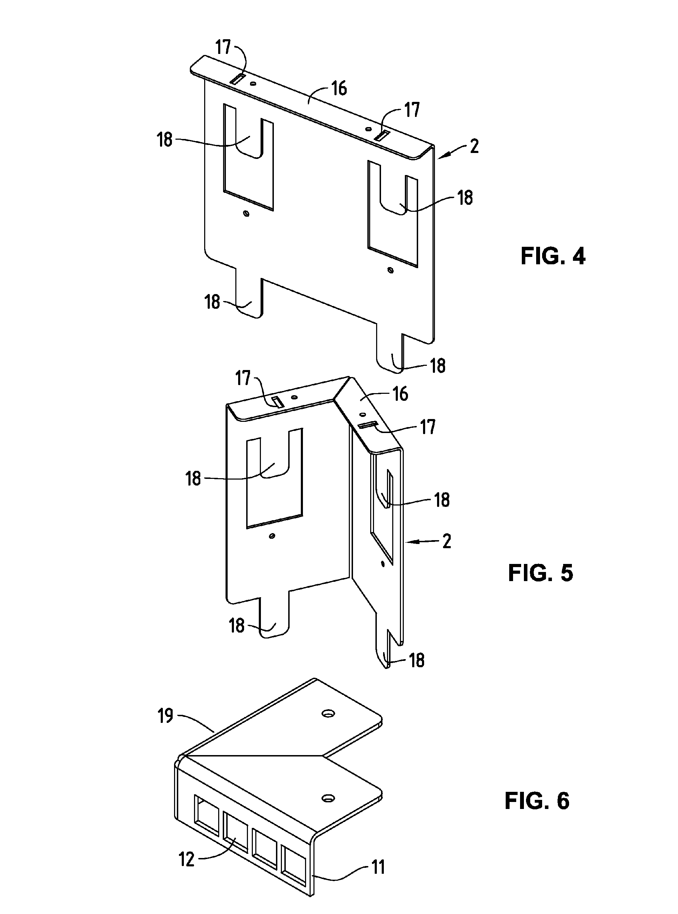

In Fig. 4 ist ein ebenes Steckelement 2 dargestellt. Dieses Steckelement 2 ist ebenfalls aus einem Blech gebildet, das aus dem selben Material bestehen kann, wie das Seitenwandelement. Der obere Seitenrand 16 des Steckelementes 2 ist um einen rechten Winkel umgebogen. In diesem umgebogenen Seitenrand 16 sind zwei schlitzförmige Ausnehmungen 17 angebracht, welche der Aufnahme der Querstreben 7 (Fig. 1) dienen. Das Steckelement 2 ist mit Zungen 18 ausgestattet, die beispielsweise durch Ausstanzen erhalten werden können.

Das Steckelement 2 kann nun mit zwei übereinander liegenden Zungen 18 in die Laschen 15 (Fig. 2) der einen Seite des Seitenwandelementes 1 eingesteckt werden. Die anderen beiden Zungen 18 des Steckelementes 2 werden in die beiden Laschen 15 des nächsten Seitenwandelementes eingesteckt. Dadurch wird in einfacher Weise eine optimale Verbindung zwischen zwei Seitenwandelementen erreicht, die in sehr einfacher Weise erhalten werden kann.

Fig. 5 zeigt ein winkliges Steckelement 2, das grundsätzlich in identischer Weise aufgebaut ist wie das Steckelement 2, das in Fig. 4 dargestellt ist, wobei das in Fig. 5 dargestellte Steckelement 2 noch um einen rechten Winkel abgewinkelt ist. Dieses winklige Steckelement 2 dient zur Verbindung, wie dies in Fig. 1 dargestellt ist, von stirnseitigen Seitenwandelementen mit längsseitigen Seitenwandelementen. Mit diesem rechtwinkligen Steckelement können rechteckförmige Umzäunungen erhalten werden, es wäre auch denkbar, diese Steckelemente mit einem anderen Winkel zu versehen, so dass beispielsweise vieleckige Gartenbeetzäune zusammengesetzt werden könnten.

Beim rechtwinkligen Zusammenfügen von zwei Seitenwandelementen 1, wie dies aus Fig. 1 ersichtlich ist, ist in der Ecke der längsstreifenförmige Kragen unterbrochen. Um die dadurch entstehende Lücke, durch welche Schnecken in das Gartenbeet eindringen könnten, zu schliessen, kann ein Eckelement 19 aufgesetzt werden, wie dies in Fig. 6 dargestellt ist. Mit diesem Eckelement 19 wird ein durchgehender längsstreifenförmiger Kragen 11 erhalten, in welchem die entsprechenden Durchbrüche 12 angebracht sind.

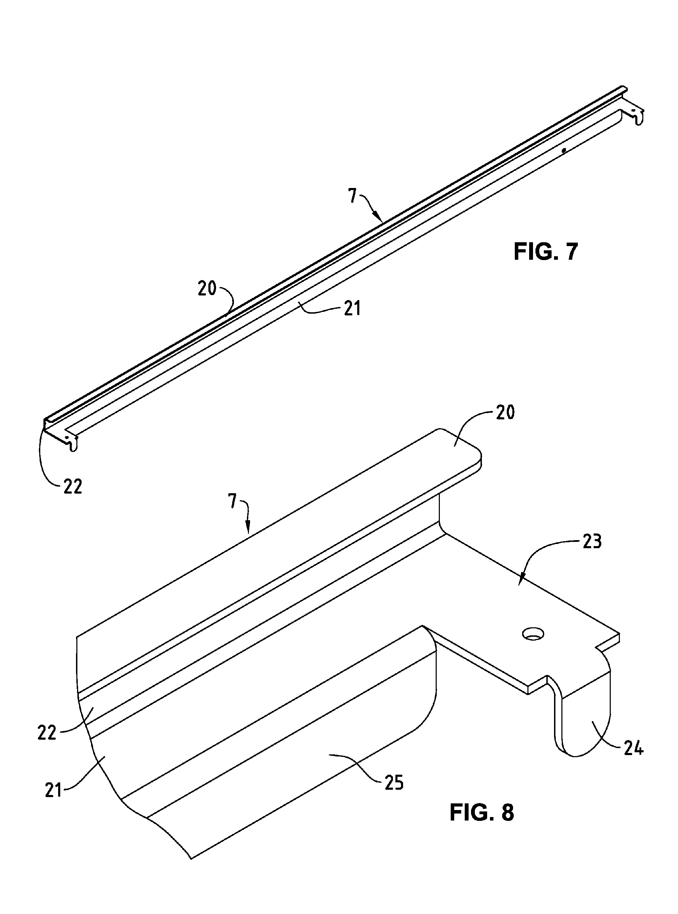

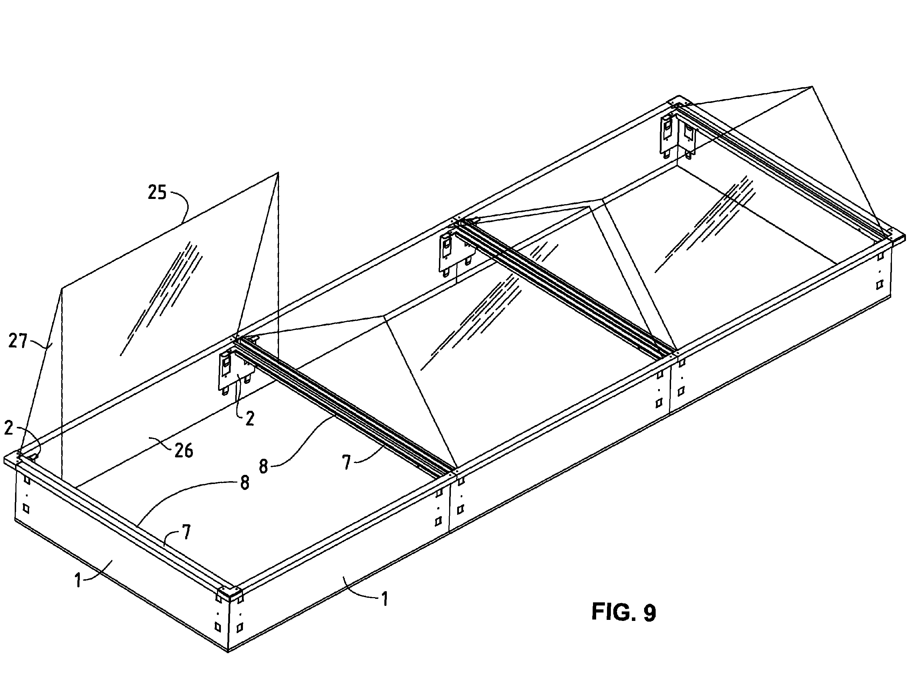

In den Fig. 7 und 8 ist der Aufbau einer Querstrebe 7 ersichtlich. Diese Querstrebe 7 ist im wesentlichen aus einem U-Profil gebildet, das aus zwei Schenkeln 20 und 21 und einem diese beiden Schenkel verbindenden Steg 22 besteht. An den seitlichen Endbereichen dieser Querstrebe 7 ist am Schenkel 21 ein Vorsprung 23 angebracht, an dessen Ende ein nach unten umgelegter Lappen 24 angeordnet ist. Zur Verstärkung der Querstrebe 7 weist der Schenkel 21 über dessen gesamte Länge eine Umbiegung 25 auf.

Diese Querstreben 7 können, wie bereits erwähnt, auf die Steckelemente 2 aufgesteckt werden. Hierbei wird der Lappen 24 in die entsprechende schlitzförmige Ausnehmung 17 (Fig. 4 und 5) eingesteckt. Die Querstreben 7 werden so auf die die Seitenwandelemente 1 verbindenden Steckelemente 2 aufgesteckt, dass die offenen Seiten der U-Profile zweier ein Paar 8 (Fig. 1) bildenden Querstreben 7 gegeneinander gerichtet sind.

Wie aus Fig. 9 ersichtlich ist, kann der durch Seitenwandelemente 1 gebildete Gartenbeetzaun, der dem Aufbau gemäss Fig. 1 entspricht, mit Abdeckungen 25 versehen werden. Jede Abdeckung 25 kommt jeweils zwischen ein Paar 8 bildende Querstreben 7 zu liegen.

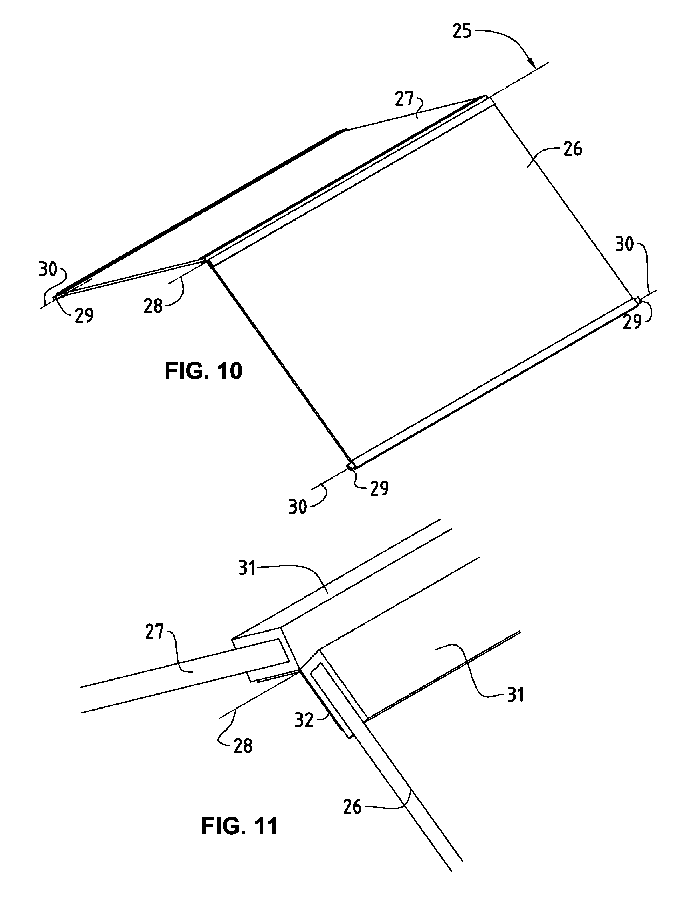

Wie aus Fig. 10 ersichtlich ist, wird jede Abdeckung 25 durch zwei lichtdurchlässige Platten 26 und 27 gebildet, die beispielsweise aus Acrylglas bestehen können. Diese beiden Platten 26 und 27 sind längsseitig um eine Schwenkachse 28 schwenkbar miteinander verbunden. An den der Schwenkachse 28 abgewandten Eckbereichen der beiden Platten 26 und 27 ist jeweils ein Zapfen 29 angebracht. Die Achse 30 dieser Zapfen 29 ist parallel zur Schwenkachse 28 ausgerichtet und ist über die jeweilige Platte 26 bzw. 27 vorstehend.

Im auf den Gartenbeetzaun aufgesetzten Zustand dieser Abdeckung 25 ragen die Zapfen 29 jeweils in die U-Profile der Querstreben 7 hinein. Zwei Zapfen 29 der einen Platte 26 sind im U-Profil der jeweiligen Querestrebe 7 längsverschiebbar. Dadurch kann die Abdeckung 25 vom das Gartenbeet überdeckenden Zustand, wie dies in Fig. 9 rechtsseitig dargestellt ist, in den geöffneten Zustand gebracht werden, wie er in Fig. 9 linksseitig dargestellt ist. Hierzu wird die Platte 26 längs der Querstreben 7 zurückgeschoben, die beiden Platten 26 und 27 stellen sich auf, die Öffnung des Gartenbeetes wird erreicht.

Es ist denkbar, dass auch die Zapfen 29 der anderen Platte 27 verschiebbar sind, es ist aber auch denkbar, dass die Zapfen der einen Platte, beispielsweise der Platte 27, in den Querstreben 7 gegen Längsverschieben gesichert sind, so dass diese Zapfen 29 lediglich eine Schwenkbewegung zulassen. Das Gartenbeet wäre dann nur von der einen Seite zugänglich.

Wie aus Fig. 11 ersichtlich ist, können die Ränder der beiden Platten 26 und 27 mit Verstärkungsprofilen 31 versehen sein. Die verschwenkbare Verbindung der beiden Platten 26 und 27 wird durch ein flexibles Band 32 gebildet, das auf die Verstärkungsleisten 31 aufgeklebt werden kann, wodurch ein Gelenk mit einer Schwenkachse 28 gebildet wird. Dieses flexible Band 32 kann eine Kunststofffolie sein, es kann auch aus einem gewebten Band bestehen oder es kann eine selbstklebende Folie sein.

Mit der vorliegenden Erfindung wird ein Baukastensystem erhalten, mit welchem ein einfacher Zaun zum Schutz gegen Schnecken ausgebaut werden kann bis zu einem abgedeckten Gartenbeet. Durch die ausschliessliche Verwendung von Steckverbindungen ist das Aufbauen in einfachster Weise möglich. Die Steckverbindungen können zusätzlich durch Bolzen oder Schrauben gesichert werden, wofür an den entsprechenden Elementen am geeigneten Platz entsprechende Bohrungen angebracht sein können.

## Patentansprüche

1. Gartenbeetzaun, umfassend Seitenwandelemente (1), welche miteinander verbindbar sind und eine geschlossene Umzäunung des Gartenbeets bilden, **dadurch gekennzeichnet, dass** die Seitenwandelemente (1) aus Platten (9) bestehen, deren nach oben gerichteter Randbereich (10) umgebogen ist, so dass ein längsstreifenförmiger Kragen (11) entsteht, der im wesentlichen parallel zur Platte (9) ausgerichtet ist und von dieser beabstandet ist, in welchem längsstreifenförmigen Kragen (11) Durchbrüche (12) angebracht sind, und dass die Seitenwandelemente (1) durch Steckelemente (2) miteinander verbindbar sind.

2. Gartenbeetzaun nach Anspruch 1, **dadurch gekennzeichnet, dass** die Durchbrüche (12) durch eine Reihe von im wesentlichen rechteckförmigen Öffnungen (13) gebildet sind, dass der jeweils zwischen den einzelnen Öffnungen (13) bestehende Steg (14) eine Breite aufweist, die wesentlich kleiner ist als die Breite der Öffnungen (13), und dass die Öffnungen (13) eine Höhe aufweisen, die mindestens der halben Höhe des längsstreifenförmigen Kragens (11) entspricht.

3. Gartenbeetzaun nach Anspruch 1 oder 2, **dadurch gekennzeichnet, dass** jedes Steckelement (2) pro Seite mit zwei Zungen (18) ausgestattet ist, welche in zwei an den Endbereichen der Seitenwandelemente (1) angebrachte Laschen (15) einsteckbar sind.

4. Gartenbeetzaun nach Anspruch 3, **dadurch gekennzeichnet, dass** zur geraden Verbindung zweier Seitenwandelemente (1) das Steckelement (2) eben ausgebildet ist und dass zur winkligen Verbindung zweier Seitenwandelemente (1) das Steckelement (2) winklig ausgebildet ist.

5. Gartenbeetzaun nach einem der Ansprüche 1 bis 4, **dadurch gekennzeichnet, dass** der im eingesteckten Zustand der Steckelemente (2) obere Seitenrand (16) um einen im wesentlichen rechten Winkel umgebogen ist, und dass in diesem umgebogenen Bereich (16) schlitzförmige Ausnehmungen (17) angebracht sind.

6. Gartenbeetzaun nach einem der Ansprüche 1 bis 5, **dadurch gekennzeichnet, dass** die Umzäunung in Form eines Rechtecks aufgebaut ist, in welchem die beiden Stirnseiten (3, 4) jeweils durch ein Seitenwandelement (1) gebildet sind, während die beiden Längsseiten (5, 6) jeweils aus einem Seitenwandelement (1) oder mehreren aneinander gereihten und miteinander verbundenen Seitenwandelementen (1) gebildet sind.

7. Gartenbeetzaun nach Anspruch 6, **dadurch gekennzeichnet, dass** in die die Seitenwandelemente (1) verbindenden, einander gegenüberliegenden Steckelemente (2) Querstreben (7) einsteckbar sind, wobei die beiden jeweils endseitig an zwei einander gegenüberliegenden Seitenwandelementen (1) angebrachten Querstreben (7) ein Paar (8) bilden.

8. Gartenbeetzaun nach Anspruch 7, **dadurch gekennzeichnet, dass** die Querstreben (7) jeweils im wesentlichen aus einem U-Profil gebildet sind, welches aus zwei Schenkeln (20, 21) und einem diese beiden Schenkel (20, 21) verbindenden Steg (22) besteht, und dass die Querstreben (7) so auf die die Seitenwandelemente (1) verbindenden Steckelemente (2) aufsteckbar sind, dass die offenen Seiten der U-Profile zweier ein Paar (8) bildender Querstreben (7) gegeneinander gerichtet sind.

9. Gartenbeetzaun nach Anspruch 7 oder 8, **dadurch gekennzeichnet, dass** an den jeweils ein Paar (8) bildenden Querstreben (7) eine Abdeckung (25) anbringbar ist.

10. Gartenbeetzaun nach Anspruch 9, **dadurch gekennzeichnet, dass** die Abdeckung (25) durch zwei im wesentlichen lichtdurchlässige Platten (26, 27) gebildet ist, die längsseitig um eine Schwenkachse (28) schwenkbar miteinander verbunden sind, und dass an den der Schwenkachse (28) abgewandten Eckbereichen der beiden Platten (26, 27) jeweils ein Zapfen (29) angebracht ist, dessen Achse (30) parallel zur Schwenkachse (28) ausgerichtet und über die Platte (26; 27) vorstehend ist, welche Zapfen (29) in die U-Profile der Querstreben (7) hineinragen.

11. Gartenbeetzaun nach Anspruch 10, **dadurch gekennzeichnet, dass** mindestens die beiden Zapfen (29) der einen Platte (26) im U-Profil der jeweiligen Querstrebe (7) längsverschiebbar sind.

12. Gartenzaunbeet nach Anspruch 10 oder 11, **dadurch gekennzeichnet, dass** die schwenkbare Verbindung der beiden Platten (26, 27) durch ein flexibles Band (32) gebildet ist, das mit den beiden Platten (26, 27) verbunden ist.
